# EUROPÄISCHE PATENTSCHRIFT

(11) **EP 0 640 650 B1**
(45) Veröffentlichungstag und Bekanntmachung des Hinweises auf die Patenterteilung: **07.01.1998**
(21) Anmeldenummer: 94110857.3
(22) Anmeldetag: 13.07.1994
(51) Int. Cl.: C08L 23/16, C08L 51/06, C08L 77/00, C08L 67/00

(54) **Blends aus elastomeren Polypropylenen und nichtolefinischen Thermoplasten**
Blends of elastomeric polypropylene and non-olefinic thermoplasts
Mélanges de polypropylène élastomère matières thermoplastiques non-oléfiniques

(30) Priorität: 26.07.1993 AT 1485/93
(43) Veröffentlichungstag der Anmeldung: 01.03.1995
(73) Patentinhaber: PCD-Polymere Gesellschaft m.b.H., A-2323 Schwechat-Mannswörth (AT)
(72) Erfinder: Gahleitner, Markus, Dipl.-Ing. Dr., A-4501 Neuhofen (AT); Bernbreitner, Klaus, Dipl.-Ing., A-4020 Linz (AT); Hafner, Norbert, Dipl.-Ing., A-4020 Linz (AT); Neissl, Wolfgang, Dipl.-Ing.Dr., A-4040 Neulichtenberg (AT)
(74) Vertreter: Kunz, Ekkehard, Dr.

(56) Entgegenhaltungen:
- EP-A- 0 548 961
- WO-A-93/06175
- DATABASE WPI Derwent Publications Ltd., London, GB; AN 68-02622Q & JP-A-43 006 795 (CHISSO)

## Beschreibung

Die Erfindung betrifft Blends aus elastomeren Polypropylenen (ELPP) mit nichtolefinischen Thermoplasten.

Blends aus isotaktischen Polypropylenen (IPP) und nichtolefinischen Thermoplasten, wie z. B. Polyamiden, Polyestern, Polystyrol oder Polycarbonat sind bekannt. Beispielsweise sind Blends aus IPP und Polyamid in der EP-A-244.601 oder EP-B-261.748 beschrieben. Blends aus gepfropften IPP und Polyamiden sind beispielsweise aus der EP-A-548.961 oder WO 93/06175 bekannt. Derartige Blends sind vor allem deshalb von Vorteil, da einerseits die günstigen Eigenschaften der einzelnen Blendkomponenten entsprechend dem gewünschten Eigenschaftsprofil der aus den Blends hergestellten Fertigteile kombiniert werden können. Andererseits ermöglicht der Einsatz des üblicherweise kostengünstigeren Polypropylens eine Kostenreduktion für das Gesamtsystem. So lassen sich beispielsweise die bei Polypropylen inhärenten Eigenschaften der geringen Feuchtigkeitsaufnahme, einfachen Verarbeitbarkeit und guten mechanischen Eigenschaften mit den je nach Typ des nichtolefinischen Thermoplasten relevanten Eigenschaften wie Sauerstoff-Barriere, Wärmeformbeständigkeit und Kratzfestigkeit kombinieren.

Ein Nachteil der Blends von nichtolefinischen Thermoplasten mit isotaktischem Polypropylen ist vor allem dadurch gegeben, daß sie eine hohe Steifigkeit aufweisen, die in vielen Anwendungen, z. B. für Folien, Schläuche, Faltenbälge etc, nicht erwünscht ist. Eine Alternative dazu stellt der Einsatz von elastomeren Systemen wie etwa amorphe Copolymere auf Basis von Ethylen und Propylen (EPR) oder von Ethylen, Propylen und Dienen (EPDM) dar. Blends mit solchen Substanzen weisen allerdings aufgrund der hochmolekularen bzw. vernetzten Strukturen von EPR und EPDM den Nachteil von vergleichsweise hohen Viskositäten auf.

Die Aufgabe der Erfindung bestand demnach insbesondere darin, Blends bereitzustellen, die einerseits zu Fertigprodukten mit niedriger Steifigkeit, ausgedrückt durch einen niedrigen E-Modul, verarbeitet werden können und andererseits leichtfließende Schmelzen mit niedriger Viskosität ergeben.

Die Aufgabe konnte dadurch gelöst werden, daß die Polypropylenkomponente in den Blends ein elastomeres Polypropylen ist.

Gegenstand der Erfindung ist demnach ein Blend, der
a) 5 bis 80 Gew.%, bevorzugt 10 bis 60 Gew.%, elastomere Polypropylene mit stereoregulärer Blockanordnung im Kettenaufbau (ELPP),
b) 20 bis 95 Gew.%, bevorzugt 40 bis 90 Gew.%, nichtolefinische Thermoplaste,
c) 0 bis 10 Gew.% Verträglichkeitsvermittler,
sowie gegebenenfalls weitere übliche Additive, Füllstoffe oder Verstärkungsstoffe enthält.

Entsprechend den gewünschten Eigenschaften können die Blends außerdem weitere Polyolefine, beispielsweise solche auf Basis von Ethylen, Propylen, Buten, Penten, Hexen oder deren Gemischen, wie z. B. Polyethylene, isotaktische, syndiotaktische oder isotaktische Propylen-Homo- oder Copolymere enthalten.

Die für die erfindungsgemäßen Blends eingesetzten elastischen Polypropylene sind insbesondere solche, wie sie beispielsweise in der US 4,335,225, US 4,522,982 und US 5,188,768 beschrieben sind. Darunter sind sowohl Homopolymere als auch Copolymere zu verstehen. Die Copolymere können neben Propylen-Einheiten auch andere Olefineinheiten, wie z. B. Ethylen, Buten-, Penten- oder Hexeneinheiten im Molekül enthalten. Sie besitzen im wesentlichen eine stereoreguläre Blockanordnung im Kettenaufbau und bestehen beispielsweise aus Blöcken von isotaktischen und ataktischen Propylensequenzen, die abwechselnd in der Polymerkette angeordnet sind. Ihre Herstellung gelingt beispielsweise gemäß US 4,355,225 durch Polymerisation mit speziellen Katalysatoren, die durch Reaktion oder Mischen von organischen Ti-, Zr- oder Hf-Verbindungen mit einem Metalloxid wie z. B. Al₂O₃, TiO₂, SiO₂ oder MgO erhalten werden. Weiters können die elastischen Polypropylene beispielsweise auch analog zu US 4,522,982 mit Hilfe von Metallocen-Katalysatoren in Kombination mit Aluminoxanen oder analog zu US 5,118,768 mit Katalysatoren auf Basis von Magnesiumalkoxiden und tetravalentem Titanchlorid in Gegenwart spezieller Elektronendonoren hergestellt werden.

Der melt flow index (MFI) gemäß ISO 1133/DIN 53735 bei 230°C/2,16 kg als Maß für die Viskosität liegt bei den verwendeten ELPP bei etwa 0,1 bis 50 g/10 min. Bevorzugt werden ELPP mit einem MFI von größer als 1 verwendet. ELPP mit höherem MFI, entsprechend einer niedrigen Viskosität können entweder direkt als Reaktorprodukte oder beispielsweise durch chemische Degradierung beispielsweise mit einem organischen Peroxid erhalten werden.

Für viele Anwendungen erweist es sich als vorteilhaft, wenn die ELPP durch Pfropfung mit ungesättigten Propfmonomeren modifiziert sind. Es ist auch möglich, Mischungen von gepfropftem ELPP und ungepfropftem ELPP zu verwenden. Der Pfropfgrad der gepfropften ELPP, das ist ihr Gehalt an Pfropfmonomeren, liegt bei etwa 0,1 bis 30 Gew.%. Als Pfropfmonomere kommen beispielsweise ungesättigte Mono- und/oder Dicarbonsäuren, deren Anhydride, deren Ester mit aliphatischen Alkoholen und Dialkoholen mit einem bis 10 C-Atomen und Glycidylether, Vinylalkoholester, sowie Vinylaromate oder Gemische aus diesen Monomeren, sowie Gemische aus diesen Monomeren und Olefinen mit 2 bis 10 C-Atomen in Frage. Besonders bevorzugt sind dabei Pfropfmonomere aus der Gruppe der Maleinsäure, Acrylsäure oder Methacrylsäure oder deren Derivaten, sowie aus der Gruppe der Vinylaromaten, wie z. B. Maleinsäureanhydrid (MSA), Glycidylmethacrylat (GMA)oder Styrol.

Die Pfropfreaktion gelingt nach Verfahren der radikalischen Pfropfcopolymerisation wie sie beispielsweise für IPP in EP-A-280.454 oder US 4,260,690 beschrieben sind, durch Pfropfen von ELPP mit ethylenisch ungesättigten Pfropfmonomeren, beispielsweise in Lösung, vorzugsweise in aromatischen Kohlenwasserstoffen im Temperaturbereich von 50 bis 200°C, vorzugsweise zwischen 80 und 150°C, oder in der Schmelze, vorzugsweise in Extrusionsmaschinen im Temperaturbereich von 170 bis 300°C, vorzugsweise zwischen 200 bis 250°C. Dabei ist es vorteilhaft, die Radikalerzeugung am Polymer durch Radikalinitiatoren wie z. B. Peroxide oder Azoverbindungen und/oder durch energiereiche Strahlung wie Gamma- oder Elektronenstrahlung zu initiieren.

Als nichtolefinische Thermoplaste sind alle thermoplastisch verarbeitbaren Kunststoffe wie z. B. Polyamide, Polyester, Polycarbonate, Polystyrol, Poly(meth)acrylate, Polyurethane, Polyoxymethylen, Polyethylenoxid, Polyphenylenoxid, geeignet. Bevorzugte nichtolefinische Thermoplaste sind Polyamide, Polyester, Polycarbonate und Polystyrol.

Als Verträglichkeitsvermittler kommen alle für Blends einsetzbaren bekannten Verträglichkeitsvermittler in Frage, beispielsweise ungesättigte Carbonsäuren oder deren Derivate wie z. B. Ester, Säurehalogenide, Anhydride oder Säureamide, bzw. mit ungesättigten Carbonsäuren oder deren Derivaten oder mit Vinylaromaten gepfropfte Polyolefine oder Elastomere. Verträglichkeitsvermittler sind kommerziell erhältlich, beispielsweise Styrol-Ethylen/Butylen-Styrol (SEBS)-Triblockcopolymere, die gegebenenfalls mit Maleinsäureanhydrid gepfropft sind (Kraton^{(R)}, Fa. Shell). Bevorzugt werden als Verträglichkeitsvermittler durch Pfropfen modifizierte Polypropylene oder Elastomere eingesetzt. Besonders bevorzugt sind durch Pfropfen modifizierte elastomere Polypropylene. Als Pfropfmonomere werden beispielsweise Maleinsäureanhydrid, Glycidylmethacrylat oder Styrol verwendet.

Die erfindungsgemäßen Blends können weiters gebräuchliche Additive, wie z. B. Verarbeitungs- und Langzeitstabilisatoren, Nukleierungsmittel, Verstärkungsstoffe und Füllstoffe enthalten. Bevorzugte Füllstoffe sind Talkum, Kreide und Kaolin. So ergeben sich z. B. Vorteile, wenn die erfindungsgemäßen Blends 2 bis 50 Gew.%, vorzugsweise 10 bis 40 Gew.% Talkum oder 1 bis 40 Gew.% Verstärkungsfasern, beispielsweise Glasfasern oder Kohlefasern enthalten.

Die erfindungsgemäßen Blends zeichnen sich durch gute Fließfähigkeit bei der Verarbeitung sowie durch geringe Steifigkeit der Fertigprodukte aus. Sie werden beispielsweise zur Herstellung von Folien oder Formkörper durch Extrusion oder Spritzguß eingesetzt.

Die erfindungsgemäßen Blends können dadurch hergestellt werden, daß
a) 5 bis 80 Gew.% elastomere Polypropylene (ELPP),
b) 20 bis 95 Gew.% nichtolefinische Thermoplaste,
c) 0 bis 10 Gew.% Verträglichkeitsvermittler,
sowie gegebenenfalls weiteren übliche Additive, Füllstoffe oder Verstärkungsstoffe, bei 180 bis 300°C in einem Mischer, Kneter oder Extruder gemischt und homogenisiert werden.

Im folgenden werden mögliche Herstellverfahren für die erfindungsgemäßen Blends beispielhaft aufgezeigt.

### A. Herstellung der elastomeren Polypropylene

### Beispiel 1:

### 1.1. Herstellung des Katalysators

44,22 g eines graubraun gefärbten Tetraneophylzirkon (TNZ; Tm= 66°C, Du Pont) wurden unter Reinststickstoffatmosphäre in 620 ml n-Hexan, gereinigt mittels eines Cu-Katalysators (BASF-Katalysator R 3-11 bei 70°C) zur Sauerstoffentfernung und 4-bzw. 10A-Molekularsieb zur Entfernung von Wasser und polaren Verunreinigungen bei 20°C in einem Schutzgaskolben gelöst. Die erhaltene Suspension wurde nach Absetzen des größten Teils des unlöslichen Rückstands nach 15 min über eine Glasfritte in einen auf -40°C gekühlten, gerührten Schutzgasglaskolben (ausgeheizt bei über 150°C und mit Reinststickstoff (unter 2ppm O₂) gespült) filtriert. Der Kolben wurde nach Abschluß der Filtration (Dauer ca. 140 min) noch 15 min unter Rühren bei -40°C gehalten, um das TNZ möglichst quantitativ auszufällen. Nach Absetzen des TNZ wurde die überstehende Lösung mittels einer Filterkerze unter N₂-Überdruck in einen weiteren gekühlten Schutzgaskolben filtriert. Das verbliebene TNZ wurde in weiteren 350 ml n-Hexan bei ca. 5 - 10°C während 15 min gelöst und nach Abkühlen auf -34°C erneut ausgefällt.

Nach Absetzen des TNZ-Niederschlags wurde die Lösung wieder mittels N2-Überdruck über eine Glasfilterkerze in den gekühlten Schutzgaskolben mit der ersten Mutterlauge filtriert. Anschließend wurde das TNZ durch Anlegen eines Ölpumpenvakuums (unter 1.10⁻² mbar) über zwischengeschaltete mit Flüssigstickstoff gekühlte Kühlfallen getrocknet. Das gereinigte TNZ zeigte einen Schmelzpunkt von 68°C und war weiß bis cremefarben. Die gesammelten Mutterlaugen wurden auf ca. 200 ml eingeengt und das noch gelöste TNZ durch Kühlen auf -40°C ausgefällt. Nach erneuter Druckfiltration über eine Filterkerze wurde das TNZ erneut in 100 ml Hexan gelöst, erneut bei -40°C ausgefällt, abfiltriert und mittels Vakuum wie oben getrocknet. Die Gesamtausbeute dieses Reinigungsprozesses betrug 82,2 %. Alle Operationen wurden unter Reinststickstoff durchgeführt.

In einen 6l-4-Hals-Schutzgaskolben wurden 266,7 g konditioniertes Al₂O₃ (Alumina C von DEGUSSA, konditioniert bei ca. 800 - 1000°C im N2-Strom und nach Lagerung bei einer rel. Luftfeuchte von 50 % und 23°C während 16 h und erneuter Trocknung zur Einstellung einer optimalen Hydroxylkonzentration an der Oberfläche von ca. 1 mmol/g Alumina C bei 400°C im Stickstoffstrom) eingewogen und mit 5035 ml n-Hexan, gereinigt mittels BASF-Katalysator R 3 - 11 und 4- bzw. 10A-Molekularsieb, versetzt. Die Suspension wurde ca. 1 h bei 300U/min gerührt. Dann wurden die oben hergestellten 33,23 g TNZ (ohne Produkt aus aufgearbeiteter Mutterlauge) in 465 ml n-Hexan (gereinigt wie oben) bei 20°C gelöst und diese TNZ-Lösung ehest unter fortwährendem Rühren zur Al₂O₃-Suspension während 50 min zugetropft, wobei nach Zugabe von wenigen ml TNZ-Lösung eine deutliche Viskositätsverminderung der Suspension eintrat. Nach Zugabe der TNZ-Lösung wurde die Drehzahl auf ca. 120 U/min verringert und weitere 12,5 h unter Lichtschutz gerührt. Zur Beschleunigung der Filtration wurde der erhaltene Katalysatorfeststoff 1 h absitzen gelassen und schließlich die Lösung mittels einer Druckfiltration über eine Glasfritte abgetrennt (Dauer 3 h). Anschließend wurde der Katalysatorfeststoff durch Anlegen eines Vakuum von unter 1.10⁻² mbar (Öldiffusionspumpe mit zwei zwischengeschalteten, flüssigstickstoffgekühlten Kühlfallen) unter Rühren bis zur Gewichtskonstanz von 292 g getrocknet (Dauer ca. 5 h). Alle Operationen wurden unter Reinststickstoff durchgeführt. Der erhaltene TNZ/Al₂O₃-Katalysator zeigte eine beige bis hellbraune Färbung und war ein frei fließendes Pulver, das eine Tendenz zur Bildung von kleinen Kugeln mit ca. 1 mm Durchmesser aufwies. Der Zr-Gehalt betrug 1,66 Gew.%.

### 1.2. Polymerisation:

Ein bei 160°C und 0,1 mbar ausgeheizter 20 I-Doppelmantelreaktor mit wandgängigem, oberflächenpoliertem Rührer, Thermostatmantel, Temperatur-, Drehzahl- und Drehmomentmessung wurde nach drei Propen/Vakuumspülzyklen mit 7,3 kg Propen bei 25°C befüllt. Nach Hochfahren des Rührwerks auf 400 U/min wurden 10,02 g des gemäß 1.1. hergestellten Katalysators mit 300 ml Flüssigpropen (ca. 20°C) eingespült und die Drehzahl nach 2 min auf 260 U/min reduziert. Anschließend wurde innerhalb von ca. 10 min die Propentemperatur auf 60°C erhöht und diese Temperatur ab Zugabe des Katalysators 120 min gehalten. Anschließend wurde die Rührerdrehzahl auf 200 U/min gesenkt und 1880 g auf ca. 50°C vorgewärmtes Aceton mittels Stickstoffüberdruck innerhalb von 3 min in den Reaktor eingebracht. Nach Erhöhung der Rührerdrehzahl auf 400U/min für ca. 2 min und anschließendes Senken auf 100 U/min wurde innerhalb von 20 min das nicht verbrauchte Propen bei 60 bis 46 °C abgeflasht. Der verbleibende ELPP (elastomeres Polypropylen)-Acetonslurry war rührbar und konnte über den 1-zölligen Bodenauslaß des Reaktors abgelassen werden.

Nach Filtration des ELPP und Trocknen im Stickstoffstrom bei 50°C erhielt man 1,88 kg eines pulvrig-krümeligen, nicht klebrigen ELPP mit einem Schmelzpunkt (Tm) von 148,1°C (gemessen mit einem Du Pont Differential Scanning Calorimeter 910/20 (Thermal Analyst 2100)), entsprechend einem bilanzierten Zr-Gehalt von 89 ppm und einem Al₂O₃-Gehalt von 0,49 Gew.%. Das ELPP wies einen MFI (melt flow index gemäß ISO 1133/DIN 53735 bei 230°C/2,16 kg von kleiner 0,01 g/10 min auf.

### 1.3. Peroxid-Degradierung:

Das gemäß 1.2. erhaltene elastische Polypropylen wurde auf einer Brechmühle nach Abkühlung auf unter 0°C bis zu einer Korngröße von unter 3 mm gemahlen. Anschließend wurden 0,2 Gew.% Bis(2-tert.butyl-peroxyisopropyl)benzol (Perkadox 14SFI, Fa. Akzo), bezogen auf die Menge des Polypropylens, eingemischt, das Gemisch auf einem 18 mm Brabender-Einschneckenextruder bei 220°C aufgeschmolzen und mit einem Ausstoß von 1 kg/h über eine Runddüse zu einem Strang von 3 mm Durchmesser extrudiert. Die Verweilzeit im Extruder betrug etwa 1 min. Der Strang wurde nach Erstarrung in einem Wasserbad granuliert. Dabei wurde das elastische Polypropylen bis zu einen MFI von 25 g/10 min degradiert. Die Messung des MFI erfolgte gemäß ISO 1133/DIN 53735 bei 230°C/2,16 kg.

### 1.4.Pfropfung:

### 1.4.1. Pfropfung mit Maleinsäureanhydrid:

In einem ölbadbeheizten 21-Rührgefäß mit Rückflußkühler, Stickstoffeinleitung, gasdichtem Rührer und Tropftrichter wurden 50 g elastomeres PP gemäß 1.3. (MFI: 25) in 1250 ml Xylol (Isomerengemisch) unter Stickstoffstrom und Rührung bei 120°C gelöst und anschließend mit 60 g Maleinsäureanhydrid (MSA) versetzt. In die Lösung wurden bei 130°C innerhalb 60 min 40 g Benzoylperoxid, gelöst in 100 ml Xylol, eingetropft. Die Lösung wurde weitere 60 min gerührt und nach Abkühlung auf 80°C in 2,5 l Aceton gegeben. Das ausgefallene Pfropfcopolymer wurde abgesaugt, in 2,5 l Aceton gewaschen, erneut abgesaugt und bei 80°C 8 Stunden im Vakuum getrocknet.
Der IR-spektroskopisch bestimmte MSA-Pfropfgrad betrug 1,2 Gew.% bezogen auf die Gesamtmenge.

### 1.4.2. Pfropfung mit Glycidylmethacrylat:

Die Pfropfung wurde analog zu Beispiel 1.4.1. durchgeführt, wobei jedoch an Stelle des MSA 60 g Glycidylmethacrylat (GMA) eingesetzt wurden.

### 1.4.3. Pfropfung mit Styrol:

Die Pfropfung wurde analog zu Beispiel 1.4.1. durchgeführt, wobei jedoch an Stelle des MSA 60 g Styrol eingesetzt wurden.

### B. Herstellung der Blends:

Zur Herstellung der Blends wurden folgende Einsatzstoffe verwendet:

### Elastomere Polypropylene (ELPP):

- ELPP 1: hergestellt gemäß Beispiel 1.3
- ELPP 2: hergestellt gemäß Beispiel 1.4.1.
- ELPP 3: hergestellt gemäß BeisDiel 1.4.2.
- ELPP 4: hergestellt gemäß Beispiel 1.4.3.

### Nichtolefinische Thermoplaste

- PA: Polyamid 6, Miramid SH3, Leuna
- PC: Polycarbonat, Lexan PK1340, General Electrics
- PS: Polystyrol, PS 165H, BASF
- PET: Polyethylenterephthalat, Polyclear G, Hoechst

### Vergleichs-Polyolefine:

- IPP: isotaktisches Polypropylen-Homopolymer, MFI 230°C/2,16kg = 10 g/10 min, Daplen KS 10, PCD Polvmere.
- EPR: Ethylen-Propylen-Resin, Mooney-Viskosität: 65 (ML(1+4) 121°C),Dutral CO 038, Fa. Enimont

### Verträglichkeitsvermittler:

- VV 1: MSA-gepfropftes ELPP gemäß Beispiel 1.4.1.
- VV 2: GMA-gepfropftes ELPP gemäß Beispiel 1.4.2.
- VV 3: Styrol-gepfropftes ELPP gemäß Beispiel 1.4.3.
- VV 4: SEBS-Copolymer, Kraton G 1652, Shell
- VV 5: MSA-gepfropftes SEBS-Copolymer, Kraton FG 1901X, Shell

### Beispiel 2:

Eine Mischung aus 20 g (50 Gew.%) PA, 48 g (45 Gew.%) des elastomeren Polypropylens (ELPP1) gemäß Beispiel 1.3. und 2 g (5 Gew.%) des Verträglichkeitsvermittlers VV5 wurde in einem Brabender-Plasticorder mit Knetkammer und pneumatischer Einfüllvorrichtung bei 260°C während 6 min geknetet. Der geknetete Blend wurde anschließend zur Bestimmung des E-Moduls und der rheologischen Eigenschaften auf einer hydraulischen Battenfeld-Presse bei 230°C zu 2 mm dicken Platten verpreßt. Der E-Modul wurde im 3-Punkt-Biegeversuch gemäß DIN 53 452/57 an 80 x 10 x 2 mm Probekörpern bestimmt. Die Viskositäten wurden mit Hilfe der Cox-Merz-Beziehung (W.P. Cox, E.Merz, J. Pol. Sci 28 (1958) 619) aus den Speicher- und Verlustmoduln (gemessen bei 230°C in Kegel-Platte-Anordndung auf einem Rheometrics RDS II Rheometer) für Scherraten von 10⁻¹ und 100 rad/s berechnet. Die Werte für E-Modul und Viskositäten sind in Tabelle 1 angeführt.

### Beispiele 3 bis 9 und Vergleichsbeispiele V1 bis V6:

Analog zu Beispiel 2 wurden Blends aus den in Tabelle 1 angeführten Einsatzstoffen durch Kneten hergestellt. Die Beispiele V 1 bis V6 sind nicht erfindungsgemäße Vergleichsbeispiele, in ihnen werden keine ELPP, sondern IPP (V1 bis V4) bzw. Elastomere (V5 und V6) als olefinische Blendkomponenten verwendet.
Im Falle der Verwendung von PET als nichtolefinische Blendkomponente (Beispiele 8, 9, V4) wurde das PET zuerst allein in der auf 270°C aufgeheizten Knetkammer während 2 min aufgeschmolzen, dann die übrigen Komponenten zugegeben und weitere 5 min geknetet. Die Preßtemperatur bei der Herstellung der PET enthaltenden Probeplatten lag ebenfalls bei 270°C.
Die Werte für die E-Moduli und Viskositäten der Blends sind in Tabelle 1 zusammengestellt. Aus den Werten ist ersichtlich, daß die ELPP-enthaltenden efindungsgemäßen Blends (Beispiele 2 bis 9) deutlich geringere Steifigkeiten, gemessen als E-Moduln, als entsprechende Blends mit IPP (Vergleichsbeispiele V1 bis V4) beziehungsweise gegenüber ähnlich weichen Blends mit Elastomeren (V5 und V6) deutlich geringere Viskositäten aufweisen.

### Beispiele 10 bis 13:

Analog zu Beispiel 2 wurden Blends aus den in Tabelle 1 angeführten Einsatzstoffen durch Kneten hergestellt. Im Fall der Verwendung von PET als nichtolefinische Blendkomponente (Beispiel 13) wurden die Knettemperatur und die Preßtemperatur auf 270°C erhöht.

Die Werte für die E-Moduln sind zusammen mit jenen der reinen nichtolefinischen Komponenten in Tabelle 1 zusammengestellt. Es konnte in jedem Fall eine deutliche Reduktion der Steifigkeit erreicht werden.

**Tabelle 1.**

| Zusammensetzung und Eigenschaften der Blends (in Gew.%) | | | | | | |
|---|---|---|---|---|---|---|
| Bsp. | | | | Biege-E-Modul (MPa) | Viskosität (Pa.s) | |
| | | | | | bei 0,01/s | bei 100/s |
| 2 | 50 % PA | 45 % ELPP1 | 5 % VV5 | 157 | 14100 | 345 |
| 3 | 50 % PA | 45 % ELPP1 | 5 % VV1 | 190 | 15000 | 330 |
| 4 | 50% PC | 45 % ELPP1 | 5 % VV5 | 135 | 1570 | 464 |
| 5 | 50 % PC | 45 % ELPP1 | 5 % VV2 | 151 | 451 | 23,4 |
| 6 | 50 % PS | 45 % ELPP1 | 5 % VV4 | 146 | 1200 | 285 |
| 7 | 50% PS | 45% ELPP1 | 5% VV3 | 164 | 495 | 192 |
| 8 | 50 % PET | 45 % ELPP1 | 5 % VV5 | 148 | 8750 | 94 |
| 9 | 50 % PET | 45 % ELPP1 | 5 % VV2 | 156 | 7000 | 76,5 |
| | | | | | | |
| V1 | 50 % PA | 45 % IPP | 5 % VV5 | 2018 | 22600 | 471 |
| V2 | 50 % PC | 45 % IPP | 5 % VV5 | 1306 | 2520 | 544 |
| V3 | 50 % PS | 45 % IPP | 5 % VV4 | 1586 | 1700 | 339 |
| V4 | 50 % PET | 45 % IPP | 5 % VV5 | 2011 | 9500 | 127 |
| V5 | 50 % PC | 45 % EPR | 5 % VV5 | 100 | 18700 | 1420 |
| V6 | 50% PS | 45% EPR | 5 % VV4 | 107 | 390000 | 3780 |
| | | | | | | |
| 10 | 85 % PA | 15 % ELPP2 | - | 1892 | | |
| 11 | 85 % PC | 15% ELPP3 | - | 1621 | | |
| 12 | 85 % PS | 15 % ELPP4 | - | 2409 | | |
| 13 | 85 % PET | 15 % ELPP3 | - | 2157 | | |
| | 100 % PA | - | - | 2100 | | |
| | 100 % PC | - | - | 2087 | | |
| | 100 % PS | - | - | 3480 | | |
| | 100 % PET | - | - | 2450 | | |

## Patentansprüche

1. Blend enthaltend
a) 5 bis 80 Gew.% elastomere Polypropylene mit stereoregulärer Blockanordnung im Kettenaufbau (ELPP),
b) 20 bis 95 Gew.% nichtolefinische Thermoplaste,
c) 0 bis 10 Gew.% Verträglichkeitsvermittler,
sowie gegebenenfalls weitere übliche Additive, Füllstoffe oder Verstärkungsstoffe.

2. Blend gemäß Anspruch 1, dadurch gekennzeichnet, daß er
a) 10 bis 60 Gew.% elastomere Polypropylene (ELPP),
b) 40 bis 90 Gew.% nichtolefinische Thermoplaste,
c) 0 bis 10 Gew.% Verträglichkeitsvermittler,
sowie gegebenenfalls weitere übliche Additive, Füllstoffe oder Verstärkungsstoffe enthält.

3. Blend gemäß Anspruch 1 oder 2, dadurch gekennzeichnet, daß die ELPP durch Pfropfung mit ungesättigten Pfropfmonomeren modifiziert sind.

4. Blend gemäß einem der Ansprüche 1 bis 3, dadurch gekennzeichnet, daß die ELPP aus einer Mischung von gepfropften ELPP und ungepfropften ELPP bestehen.

5. Blend gemäß einem der Ansprüche 1 bis 4, dadurch gekennzeichnet, daß die elastomeren Polypropylene einen melt flow index (MFI) bei 230°C/2,16 kg von größer 1 aufweisen.

6. Blend gemäß einem der Ansprüche 1 bis 5, dadurch gekennzeichnet, daß die nichtolefinischen Thermoplaste Polyamide, Polystyrol, Polycarbonate oder Polyester sind.

7. Blend gemäß einem der Ansprüche 1 bis 6, dadurch gekennzeichnet, daß der Verträglichkeitsvermittler ein durch Pfropfen modizifiertes Polypropylen oder Elastomer ist.

8. Blend gemäß Anspruch 7, dadurch gekennzeichnet, daß der Verträglichkeitsvermittler ein durch Pfropfen modifiziertes elastomeres Polypropylen ist.

9. Blend gemäß einem der Ansprüche 1 bis 8, dadurch gekennzeichnet, daß die Füllstoffe Talkum, Kreide oder Kaolin sind.

10. Verfahren zur Herstellung von Blends gemäß einem der Ansprüche 1 bis 9, dadurch gekennzeichnet, daß
a) 5 bis 80 Gew.% elastomere Polypropylene mit stereoregulärer Blockanordnung im Kettenaufbau (ELPP),
b) 20 bis 95 Gew.% nichtolefinische Thermoplaste,
c) 0 bis 10 Gew.% Verträglichkeitsvermittler, sowie gegebenenfalls weitere übliche Additive, Füllstoffe oder Verstärkungsstoffe bei 180 bis 300°C in einem Mischer, Kneter oder Extruder gemischt und homogenisiert werden.

## Claims

1. Blend containing
a) 5 to 80% by weight of elastomeric polypropylenes with a stereoregular block arrangement in the chain structure (ELPP),
b) 20 to 95% by weight of nonolefinic thermoplastics,
c) 0 to 10% by weight of compatibilizers
and optionally further customary additives, fillers or reinforcing materials.

2. Blend according to Claim 1, characterized in that it contains
a) 10 to 60% by weight of elastomeric polypropylenes (ELPP),
b) 40 to 90% by weight of nonolefinic thermoplastics,
c) 0 to 10% by weight of compatibilizers
and optionally further customary additives, fillers or reinforcing materials.

3. Blend according to Claim 1 or 2, characterized in that the ELPP are modified by grafting with unsaturated graft monomers.

4. Blend according to one of Claims 1 to 3, characterized in that the ELPP consist of a mixture of grafted ELPP and ungrafted ELPP.

5. Blend according to one of Claims 1 to 4, characterized in that the elastomeric polypropylenes have a melt flow index (MFI) at 230°C/2.16 kg of more than 1.

6. Blend according to one of Claims 1 to 5, characterized in that the nonolefinic thermoplastics are polyamides, polystyrene, polycarbonates or polyesters.

7. Blend according to one of Claims 1 to 6, characterized in that the compatibilizer is an elastomer or polypropylene modified by grafting.

8. Blend according to Claim 7, characterized in that the compatibilizer is an elastomeric polypropylene modified by grafting.

9. Blend according to one of Claims 1 to 8, characterized in that the fillers are talc, chalk or kaolin.

10. Process for the preparation of blends according to one of Claims 1 to 9, characterized in that
a) 5 to 80% by weight of elastomeric polypropylenes with a stereoregular block arrangement in the chain structure (ELPP),
b) 20 to 95% by weight of nonolefinic thermoplastics,
c) 0 to 10% by weight of compatibilizers
and optionally further customary additives, fillers or reinforcing materials are mixed and homogenized at 180 to 300°C in a mixer, kneader or extruder.

## Revendications

1. Mélange contenant
a) de 5 à 80 % en poids de polypropylènes élastomères avec un agencement stéréorégulier des séquences dans la structure de la chaîne (ELPP),
b) de 20 à 95 % en poids de matières thermoplastiques non oléfiniques,
c) de 0 à 10 % en poids d'agent de compatibilité,
ainsi qu'éventuellement d'autres additifs, charges ou substances de renfort usuels.

2. Mélange selon la revendication 1, caractérisé en ce qu'il contient
a) de 10 à 60 % en poids de polypropylènes élastomères (ELPP),
b) de 40 à 90 % en poids de matières thermoplastiques non-oléfiniques,
c) de 0 à 10 % en poids d'agent de compatibilité,
ainsi qu'éventuellement d'autres additifs, charges ou substances de renfort usuels.

3. Mélange selon la revendication 1 ou 2, caractérisé en ce qu'on modifie les ELPP par greffage avec des monomères de greffage insaturés.

4. Mélange selon l'une des revendications 1 à 3, caractérisé en ce que les ELPP sont formés d'un mélange de ELPP greffés et de ELPP non greffés.

5. Mélange selon l'une des revendications 1 à 4, caractérisé en ce que les polypropylènes élastomères présentent un indice d'écoulement à l'état fondu (MFI : *Melt Flow Index)* supérieur à 1 à 230°C/2,16 kg.

6. Mélange selon l'une des revendications 1 à 5, caractérisé en ce que les matières thermoplastiques non oléfiniques sont des polyamides, du polystyrène, des poly-carbonates ou des polyesters.

7. Mélange selon l'une des revendications 1 à 6, caractérisé en ce que l'agent de compatibilité est un polypropylène ou un élastomère modifié par greffage.

8. Mélange selon la revendication 7, caractérisé en ce que l'agent de compatibilité est un polypropylène élastomère modifié par greffage.

9. Mélange selon l'une des revendications 1 à 8, caractérisé en ce que les charges sont constituées de talc, de craie ou de kaolin.

10. Procédé de préparation des mélanges selon l'une des revendications 1 à 9, caractérisé en ce qu'on mélange et on homogénéise
a) de 5 à 80 % en poids de polypropylènes élastomères avec un agencement stéréorégulier des séquences dans la structure de la chaîne (ELPP),
b) de 20 à 95 % en poids de matières thermoplastiques non oléfiniques,
c) de 0 à 10 % en poids d'agent de compatibilité,
ainsi qu'éventuellement d'autres additifs, charges ou substances de renfort usuels, à une température de 180 à 300°C, dans un mélangeur, un malaxeur ou une extrudeuse.
